## Europäisches Patentamt
## European Patent Office
## Office européen des brevets

(19)

(11) Veröffentlichungsnummer: **0 021 008**
A1

(12) # EUROPÄISCHE PATENTANMELDUNG

(21) Anmeldenummer: 80102710.3

(22) Anmeldetag: 16.05.80

(51) Int. Cl.³: **G 03 B 23/00, G 02 B 27/18**

(30) Priorität: 26.06.79 DE 2925714

(43) Veröffentlichungstag der Anmeldung: 07.01.81
Patentblatt 81/1

(84) Benannte Vertragsstaaten: **AT BE CH DE FR GB IT LI LU NL SE**

(71) Anmelder: **Rollel-Werke Franke & Heidecke GmbH + Co KG, Salzdahlumer Strasse 196, D-3300 Braunschweig (DE)**

(72) Erfinder: **Rodeck, Hans Jürgen, Über dem Steinbruch 2, D-3301 Erkerode (DE)**

(74) Vertreter: **Pretzell, Hellmut, Dipl.-Ing., Salzdahlumer Strasse 196, D-3300 Braunschweig (DE)**

(54) **Vorrichtung für verdeckten Dia-Wechsel und Verfahren zur Herstellung derselben sowie Projektor.**

(57) Es wird eine Vorrichtung zur Vermeidung bzw. Verminderung des für den Betrachter unangenehmen Effektes der Dunkelpause bei der Projektion von Dias vorgeschlagen. Eine aus Einzellinsen (12) bestehende Linsenrasterplatte, die an ihrer Rückseite ein in die Projektionsebene projizierbares Bild (BPB1 – BPB3) enthält, wird als Abdunklungsschieber während des Diawechsels in den Strahlengang zwischen Dia-Ebene (20) und Projektionsobjektiv (22) eingefahren. Das auf der Linsenrasterplatte befindliche Bild wird durch die Linsen (12) der Linsenrasterplatte und durch das Projektionsobjektiv (22), wenn auch von der Schwärzung der wechselnden Dias beeinträchtigt, scharf auf der Leinwand (PB2, PB3) abgebildet. Es können mehrere Pausenbilder vorgesehen sein.

R o l l e i - W e r k e
Franke & Heidecke
GmbH & Co KG
Braunschweig

- / -

0021008

25.Juni 1979

A 1159 EU

Die Erfindung betrifft eine Vorrichtung für den verdeckten
Dia-Wechsel, und ein Verfahren zum Herstellen dieser Vorrichtung.

Es ist für Betrachter von projizierten Dias sehr unangenehm, wenn beim Auswechseln der Dias zwischenzeitlich der
ungeschwächte, blendend helle Lichtkegel auf der Leinwand
erscheint. Unangenehm sind für das Auge des Betrachters auch
die beim Herausfahren und beim Hereinfahren von Dias über
die Leinwand huschenden projizierten Bilder.

Zur Vermeidung dieses Effektes wurden bereits Projektoren
vorgeschlagen, bei denen vor dem Herausfahren eines Dias
aus der Bildbühne eine Blende in den Strahlengang eingebracht und erst dann wieder entfernt wird, wenn ein neues
Dia in die Bildbühne eingefahren worden ist. Beim Vorführen von Dias mit derartigen Projektoren, bei denen die auszuwechselnden Dias während des Wechselvorgangs verdeckt
sind, treten jedoch zwischen je zwei Bildprojektionen Dunkelpausen ein, während derer man nichts sieht, was ebenfalls
unangenehm ist.

Aufgabe der Erfindung ist es, eine Vorrichtung zu schaffen, welche einen verdeckten Dia-Wechsel ohne störende Dunkelpausen ermöglicht.

Dieses Merkmal ist gemäß der Erfindung durch eine zwischen Dia-Ebene und Projektionsobjektiv bringbare Linsenrasterplatte gelöst, deren Rückseite ein in der Projektionsebene abbildbares "Bild" enthält.

Diese Linsenrasterplatte kann, während ein Dia projiziert wird, in den Strahlengang zwischen Dia-Ebene und Projektionsobjektiv eingebracht werden. Dieses "Bild" wird durch die Linsen der Linsenrasterplatte und durch das Projektionsobjektiv scharf auf der Leinwand abgebildet, wobei seine Helligkeitswerte durch die Schwärzung des Dias bestimmt sind. Wenn diese Linsenrasterplatte sich im Strahlengang befindet, sind von dem Dia selber keine Einzelheiten mehr auf der Leinwand erkennbar, da durch die Linsen der Linsenrasterplatte die bildbühnenseitige Brennweite verkürzt worden ist. Wenn das Dia aus der Bildbühne herausgefahren wird, fällt das Licht der Projektionslampe voll auf die Linsenrasterplatte, so daß deren Rückseite voll beleuchtet wird. Dieses "Pausenbild" bleibt solange auf der Leinwand stehen, bis ein neues Dia in die Bildbühne eingefahren wird. Auch wenn ein Zeitraum von einigen Sekunden zwischen dem Herausfahren eines Dias und dem Einfahren des folgenden Dias vergehen, entsteht keine unangenehme Dunkelpause und auch kein blendend heller Fleck auf der Leinwand.

Nach einer Ausbildungsform der Erfindung enthält die Linsenrasterplatte auf ihrer Rückseite eine Lochmaske, deren Löcher den Linsen der Linsenrasterplatte zugeordnet sind. Diese
Löcher bilden das"Bild" auf der Rückseite der Linsenrasterplatte. Während letztere sich im Strahlengang zwischen Dia-
Ebene und dem Projektionsobjektiv befindet, werden diese
Löcher auf der Leinwand abgebildet.

Die Mittelpunkte der Löcher sind zweckmäßigerweise jeweils
auf den optischen Strahlen angeordnet, welche durch die
Pupille des Projektionsobjektivs und den Scheitelpunkt der
jeweils zugeordneten Rasterlinse hindurchgehen.

Die Löcher der Linsenrasterplatte weisen bei dieser Ausführungsform von der Mitte der Platte zum Rand hin zunehmend größeren Abstand voneinander auf.

Die Linsenrasterplatte kann aus Plexiglas bestehen, welches
eingefärbt sein kann. Im letzten Falle erscheinen die einzelnen Punkte in der Farbe der Linsenrasterplatte. Wenn das
Plexiglas nicht eingefärbt ist, erscheinen die einzelnen
Punkte in der Farbe des dahinterliegenden Dias, von dem jedoch keine Einzelheiten erkennbar sind.

Die Linsenrasterplatte kann aber auch aus einem nicht eingefärbten Plexiglas bestehen. Wenn die einzelnen Punkte trotzdem farbig auf der Leinwand erscheinen sollen, kann die Farbe
auch durch einen entsprechenden Film oder Filter hinter der
Rasterplatte erzeugt werden.

Nach einer Weiterbildung der Erfindung können die Löcher
strukturiert sein. In diesem Fall wird die entsprechende
Struktur auf der Leinwand abgebildet.
Nach einer Weiterbildung der Erfindung können die
Löcher so groß sein, daß sie ohne Zwischenraum auf
der Leinwand so abgebildet werden, so daß ein ganzes "Pausendia" auf der Leinwand erscheint. Beim Einschieben der Linsenrasterplatte würde bei einer derartigen Anordnung zunächst der Teil des Dias, der von der Rasterplatte verdeckt ist, abgedunkelt, und erst im letzten Moment wird das Pausendia aufleuchten.

Nach einer anderen vorteilhaften Weiterbildung der Erfindung können den einzelnen Linsen der Linsenrasterplatte mehrere strukturierte Löcher zugeordnet sein. Das ist auf Grund der Sammelwirkung der Linsen der Linsenrasterplatte möglich, welche zur Folge hat, daß nur ein Teil der hinter den einzelnen Linsen befindlichen Rückseitenfläche der Linsenrasterplatte für ein Pausenbild erforderlich ist. Es können z.B. noch zwei Sätze von strukturierten Löchern auf der Rückseite der Linsenrasterplatte vorhanden sein. Wenn diese Linsenrasterplatte bei ihrem Einfahren in den Strahlengang ein Drittel des Dias abdeckt, erscheint kurzfristig ein erstes Pausen-Dia oder Pausen-Bild; wenn die eingefahrene Linsenrasterplatte etwa zwei Drittel des Dias abdeckt, erscheint ein zweites Pausen-Dia auf der Leinwand; wenn das Dia voll von der Linsenrasterplatte abgedeckt ist, erscheint ein drittes Pausen-Dia auf der Leinwand. Beim Herausfahren der Linsenrasterplatte läuft der Vorgang in umgekehrter Reihenfolge ab.

Nach einer anderen besonders vorteilhaften Weiterbildung der Erfindung ist mit der Linsenrasterplatte ein Film verbunden, auf welchem ein Satz von Teilbildern aufgezeichnet ist, die jeweils einer Rasterlinse zugeordnet sind und die Teile einer Pausenbildvorlage sind, welche z.B. ein Foto oder eine

- 5 -

Zeichnung sein kann. Bei der Projektion dieses Satzes
von Teilbildern durch die Linsenrasterplatte und durch
das Projektionsobjektiv hindurch wird die ursprüngliche Vorlage als Pausenbild, z.B. als zusammenhängendes
Foto oder als zusammenhängende Zeichnung auf der Leinwand erscheinen. Bei dieser Ausführungsform der Erfindung muß keine Maske auf der Rückseite der Linsenrasterplatte vorhanden sein.

Nach einer anderen Weiterbildung der Erfindung enthält
der mit der Linsenrasterplatte verbundene Film mehrere
Sätze von Teilbildern, welche verschachtelt angeordndet
und von denen jeder Satz bei der Projektion durch die
Linsenrasterplatte und das Projektionsobjektiv ein anderes Pausenbild erzeugt.

Mit dieser Weiterbildung der Erfindung lassen sich interessante Effekte erzeugen, je nach Verwendung der
linsenrasterplatte:

a) stationäres Pausendia:
Während z.B. der rechte Teil des Dias verschwindet, erscheint dort überblendartig
der rechte Teil des Pausendias;

b) einlaufendes Pausendia:
Während z.B. der rechte Teil des Dias verschwindet, läuft das Pausendia von rechts
ein, beginnend mit dem linken Pausendiateil;
diese Verwendungsart ist nur bei langsamen
Bewegungen sinnvoll;

- 6 -

c) animiertes stationäres Pausendia:
   Wie a), die nicht vollständigen zwischenzeitlich aufleuchtenden Pausendias sind
   Bewegungsphasen des vollständigen Pausendias;
   die Gestaltung der einzelnen Pausendias
   kann beliebig nach Geschmack vorgenommen
   werden.

In den Schutzumfang fallen auch Projektoren, welche eine
Führungseinrichtung zum Einführen einer Linsenrasterplatte
gemäß der Erfindung aufweisen. Nach einer Weiterbildung der
Erfindung können die Führungseinrichtungen der Projektorenraster oder Verzögerungseinrichtungen zum intermittierenden Einfahren der Linsenrasterplatte aufweisen.

Nach einer anderen Weiterbildung der Erfindung ist eine
Einrichtung vorgesehen, welche beim Herausfahren des
Dias automatisch die Linsenrasterplatte hereinfährt und
sie beim Einfahren eines Dias automatisch herausfährt.

Das Hereinfahren der Linsenrasterplatte kann mit diesem
automatischen Mechanismus auch unmittelbar vor Herausfahren des gerade projizierten Dias erfolgen, und das Herausfahren der Linsenrasterplatte kann mit diesem Mechanismus
auch vor dem Hereinfahren eines neuen Dias erfolgen.

In den Schutzumfang der Erfindung fallen auch Verfahren zum
Herstellen von Linsenrasterplatten der beschriebenen Art.

Gemäß der Erfindung werden auf einen mit einer Linsenrasterplatte verbundenen Film durch mehrere übereinander oder nebeneinander angeordnete Objektive und durch die
Linsen der Linsenrasterplatte hindurch entsprechend
viele Pausenbildvorlagen abgebildet, und danach wird
der Film entwickelt. Nach einem anderen erfindungsgemäßen Verfahren zur Herstellung von Linsenrasterplatten wird eine mit einem Film verbundene Linsenrasterplatte relativ zu einem Projektionsobjektiv
auf einen Bruchteil 1/n ihrer Höhe in den Strahlengang eingefahren und belichtet, danach wird die Linsenristerplatte weitere (n - 1) Male um den gleichen
Bruchteil 1/n weiter eingefahren und jeweils belichtet
und danach wird der Film entwickelt.

Weitere Vorteile und Merkmale der Erfindung gehen aus
den Unteransprüchen in Verbindung mit der Beschreibung
und der Zeichnung hervor. In letzterer zeigen:

Fig. 1 ein Bruchstück einer Linsenrasterplatte
mit einer Lochblende auf ihrer Rückseite,

Fig. 2 die geometrische Anordnung der Lochblende

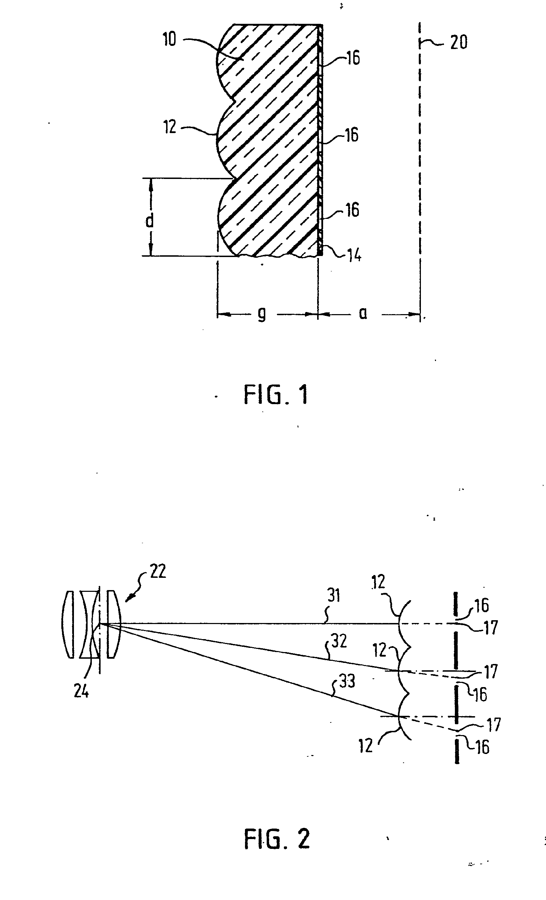

der Fig. 1 in Bezug auf die Linsen der
Linsenrasterplatte und das Projektionsobjektiv,

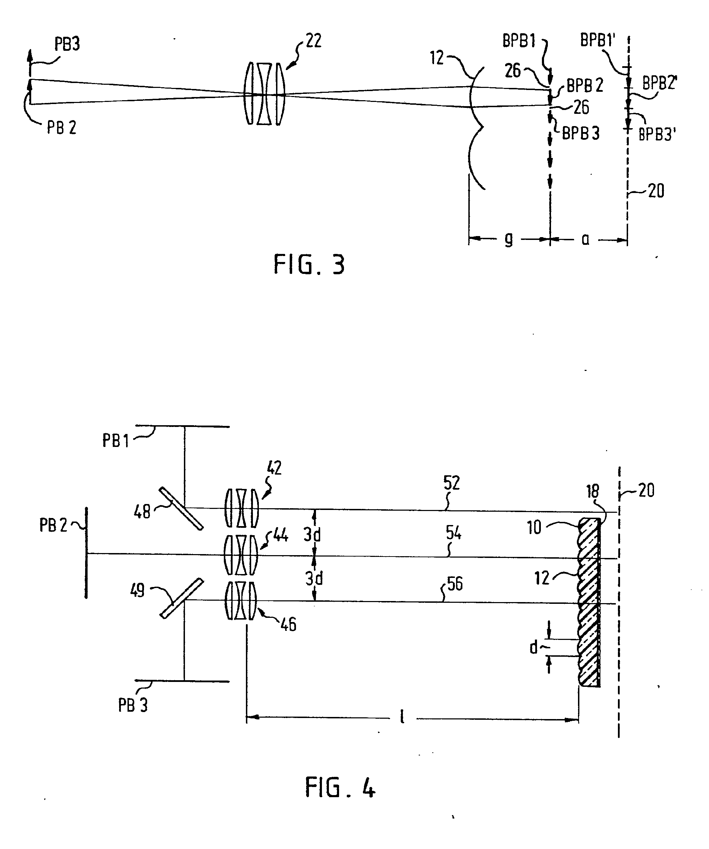

Fig. 3 eine schematische Darstellung der Projektionsstrahlengänge mit und ohne Linsenrasterplatte
im Strahlengang, und

Fig. 4 eine Anordnung zur Herstellung von Linsenrasterplatten mit Sätzen von Teilbildern
auf ihrer Rückseite.

- 8 -

In Fig. 1 ist ein Bruchstück einer Linsenrasterplatte 10 dargestellt, welche aus rot gefärbtem Plexiglas besteht. Diese Linsenrasterplatte 10 weist an ihrer dem Projektionsobjektiv (nicht dargestellt) zugewandten Seite Linsen 12 auf, deren Durchmesser mit d bezeichnet ist und die einen Krümmungsradius r haben.

Die Dicke der Linsenrasterplatte jeweils von der Kuppe einer Linse bis zur Rückseite der Linsenrasterplatte ist mit g bezeichnet. Auf der Rückseite der Linsenrasterplatte befindet sich eine Lochblende 14, welche eine Anzahl von Löchern 16 aufweist, wobei jeder Linse ein solches Loch zugeorndet ist.

In einem Ausführungsbeispiel der Erfindung sind

a = Abstand zwischen Dia-Ebene und Rückseite der Linsenrasterplatte = 5 mm

g = Glasdicke der Linsenrasterplatte = 5 mm

d = Durchmesser der Linsen (z.B. quadratisch oder hexagonal) = 4 mm

n = Brechungsindex = 1,5

r = Krümmungsradius der Linsen = 2,5 mm

Bei diesem Ausführungsbeispiel gilt die Gleichung

$$\frac{n-1}{r} \cong \frac{n}{g} - \frac{1}{g+a}$$

Die genaue Anordnung der Löcher relativ zu den Linsen 12
der Linsenrasterplatte ist in Fig. 2 schematisch dargestellt. In dieser Anordnung ist links das Projektionsobjektiv 22 gezeichnet, und rechts von diesem sind
Bruchstücke der Linsenrasterplatte 10 eingezeichnet.
Der besseren Übersichtlichkeit wegen sind von dieser
Linsenrasterplatte 10 lediglich einzelne Linsen 12 und
jeweils der entsprechende Teil der Rückseite der Linsenrasterplatte gezeichnet. Auf dieser Rückseite sind durch
Punkte 17 die Mittelpunkte der Löcher 16 der Lochblende 14
dargestellt. Ferner sind die von der Pupille des Projektionsobjektives 22 zu den Linsen der Linsenrasterplatte 10
ausgehenden Strahlen gezeichnet.

Wie man dieser Fig. 2 entnehmen kann, sind die Löcher 16
in der Lochplatte so ausgebildet, daß die Mittelpunkte 17
der Löcher 16 jeweils auf dem Strahl liegen, welcher von
der Pupille 24 des Projektionsobjektives 22 zum Mittelpunkt
der dem jeweiligen Loch zugeordneten Linsen 12 gelangt
und durch diese hindurchgetreten ist. Der oberste der
schematisch dargestellten drei Strahlengänge dieser Fig.2
trifft senkrecht auf die Linse 12 auf und ungebrochen
durch sie hindurch. Der Mittelpunkt 17 des zugeordneten
Loches der Lochblende 14 liegt somit direkt auf dem Lot
von der Kuppe der Linse 12 auf die Rückseite der Linsenrasterplatte.

Der mittlere Strahl 32 dieser Fig. 2 trifft unter einem
Winkel auf die Kuppe der mittleren Linse 12 auf, und wird
durch diese gebrochen. Wie man sieht, befindet sich der
Mittelpunkt 17 des dieser Linse 12 zugeordneten Loches

- 10 -

gegenüber dem Lot vor der Kuppe dieser Linse 12 auf die Rückseite der Linsenrasterplatte 10 nach unten versetzt.

Der dritte Strahl 33 fällt unter einem noch stärkeren Winkel auf die Kuppe der ihm zugeordneten Linse 12 und wird dementsprechend auch noch stärker von dieser gebrochen als der Strahlengang 32 von der ihm zugeordneten Linse 12. Der Mittelpunkt 17 dieses dritten Loches 16 befindet sich gegenüber dem von der Kuppe der Linse 12 auf die Rückseite der Linsenrasterplatte 10 gezogenen Lot um einen noch größeren Betrag nach unten versetzt.

Die Anordnung der Löcher ist, wie sich aus dieser Beschreibung ergibt, so getroffen, daß sie von der Pupille des Projektionsobjektives 22 aus gesehen zu den einzelnen Linsen zentriert sind. Die einzelnen Löcher 16 der Lochblende 14 weisen von der Mitte der Lochblende aus gesehen zum Rand hin zunehmend größere Abstande voneinander auf.

Der Durchmesser der Löcher beträgt in einem Ausführungsbeispiel 1,3 mm.

Da das Plexiglas im Ausführungsbeispiel rot eingefärbt ist, erscheinen die einzelnen Punkte ebenfalls in roter Farbe. Bei Verwendung einer nicht eingefärbten Linsenrasterplatte würden die einzelnen Löcher der Lochblende oder auch Punkte in der Farbe des dahinterliegenden Dias, von dem jedoch keine Einzelheiten erkennbar sind, auf der Leinwand abgebildet werden.

Zwischen der Rückseite der Linsenrasterplatte und der Dia-Ebene kann auch ein Farbfilter angeordnet sein. In diesem Falle würden die Löcher oder Punkte 16 der Lochblende in der Farbe dieses Filters auf der Leinwand erscheinen.

Wenn die Löcher ausreichend groß strukturiert sind, wird die
entsprechende Struktur auf der Leinwand abgebildet, so daß
z.B. ein ganzes Pausendia auf der Leinwand erscheint.

In der Fig. 3 sind in schematischer Darstellung die Projektionsstrahlengänge mit und ohne Linsenrasterplatte im
Strahlengang dargestellt. An der linken Seite sieht man,
in der Ebene der Leinwand, ein Projektions- oder Pausenbild
PB2, welches durch das Projektionsobjektiv 22 nach rechts
projiziert wird. Dieses als Pfeil gezeichnete Projektionsbild PB2 würde in der Dia-Ebene 20 als umgekehrter Pfeil
BPB2' dargestellt. Ein in der Leinwand-Ebene über dem zweiten Projektionsbild PB2 gezeichnetes drittes Projektionsbild BP3, welches ebenfalls als aufrechter Pfeil dargestellt
ist, würde bei nicht vorhandener Linsenrasterplatte in der
Dia-Ebene 20 als nach unten gerichteter Pfeil BPB3' abgebildet werden.

Wenn die Linsenrasterplatte 10 in ihre Position zwischen
Projektionsobjektiv 22 und Dia-Ebene 20 eingebracht worden
ist, ändern die Linsen 12 der Linsenrasterplatte 10 die
Strahlengänge  rechts von dem Projektionsobjektiv 22. Wie
man der Fig. 3 entnehmen kann, ist das Bild BPB2, wegen der
Sammelwirkung der Linse 12, erheblich kleiner als das Bild
BPB2', welches ohne Linsenrasterplatte 10 in der Dia-Ebene
erscheinen würde. Auf der Rückseite der Linsenrasterplatte 10
können somit hinter jeder Linse 12 mehrere Teilbilder aufgezeichnet sein. Von diesen Teilbildern gehört jeweils eines
zu einem Satz von Teilbildern, welcher einem ersten Projektions-oder Pausenbild entspricht. Die anderen Teilbilder gehören zu anderen Teilbildsätzen, welche weiteren Pausenbildern entsprechen bzw. weitere Pausenbilder auf der Leinwand erzeugen können.

Diese Teilbilder müssen keineswegs Löcher sein, sie können auch Teilbilder von Fotos oder Zeichnungen sein. Die Pausenbilder selber können jeweils einzelne Streifen der Leinwand überdecken. Es ist jedoch auch möglich, die Teilbilder so aufzuzeichnen, daß jeder Satz von Teilbildern bei der Projektion die gesamte Leinwand überdeckt, so daß ein gesamtes Überblend-Pausenbild erscheint.

Wenn diese Linsenrasterplatte ein Drittel des Dias abgedeckt hat, erscheint kurzzeitig ein erstes Pausenbild; wenn diese Linsenrasterplatte zwei Drittel des Dias abdeckt, erscheint ein zweites Pausenbild und wenn die Linsenrasterplatte das gesamte Dia abdeckt, erscheint ein drittes Pausenbild oder Pausendia. Beim Herausfahren der Rasterplatte läuft der Vorgang in umgekehrter Reihenfolge ab.

Da zwischen den Bildern BPB1, BPB2 und BPB3 auf der Rückseite der Linsenrasterplatte jeweils ein Abstand 26 vorhanden ist, wie man aus Fig. 3 sieht, kommt diese Vorrichtung ohne Richtblenden zwischen Linsenrasterplatte 10 und Projektionsobjektiv 22 aus.

Die Fig. 4 zeigt eine Anordnung zur Herstellung von Linsenrasterplatten mit Bildern auf ihrer Rückseite. Es sind ein erstes Objektiv 42, ein zweites Objektiv 44 und ein drittes Objektiv 46 übereinander angeordnet. Der Abstand zwischen den Pupillen dieser drei Objektive beträgt jeweils 3d.

- /3 -

Links von dem mittleren oder zweiten Objektiv 44 ist die
Vorlage PB2 für ein zweites Pausenbild angedeutet. PB2
liegt auf der Achse des mittleren Objektivs 44. Links von
dem ersten oder obersten Objektiv 42 befindet sich ein
Spiegel 48, welcher Licht von der Vorlage PB1 für ein
erstes Pausenbild in das erste Objektiv 42 einspiegelt.
Symmetrisch zum ersten Spiegel 48 ist ein zweiter Spiegel 49
angeordnet, welcher Licht von der Vorlage für das dritte
Pausenbild PB3 zu dem dritten Objektiv 46 hin umlenkt.

Im Abstand 1 von der Ebene der Pupillen der Objektive 42,
44 und 46 ist eine Linsenrasterplatte 10 angeordnet. Der
Durchmesser der Linsen 12 dieser Linsenrasterplatte 10 beträgt d. Zwischen den horizontalen Zentralstrahlen 54 und
56, die jeweils durch die Mitte einer Linse 12 hindurchtreten, befinden sich noch zwei weitere Linsen 12. Der
Abstand zwischen benachbarten Zentralstrahlen 52, 54 und
56 beträgt jeweils

$$d/2+d+d+d/2 \quad = \quad 3d.$$

Die drei Objektive bilden die zugehörigen Vorlagen auf die
Dia-Ebene ab. Der Film 18 an der Rückseite der Linsenrasterplatte 10 wird durch die drei Objektive und die Linsen 12
belichtet und anschließend entwickelt. Dieser Film kann abnehmbar, z.B. mit Pass-Stiften an der Linsenrasterplatte 10
befestigt sein, er kann aber auch auf die Rückseite der
Linsenrasterplatte 10 aufgegossen sein.

Das erste Objektiv befindet sich dort, wo die Mitte der Austrittspupille liegt, wenn die Linsenrasterplatte 1/3 eingefahren ist. Das zweite Objektiv 44 befindet sich dort, wo die Austrittspupille liegt, wenn die Linsenrasterplatte 10 etwa 2/3 eingefahren ist, und das dritte Objektiv 46 befindet sich dort, wo die Austrittspupille liegt, wenn die Linsenrasterplatte voll eingefahren ist.

In einem Ausführungsbeispiel betrug der Abstand l=85 mm, und der Durchmesser der Linsen 12 betrug d = 4 mm.

Die beschriebenen Ausführungsbeispiele sollen den Schutzumfang der vorliegenden Erfindung nicht einschränken. Modifikationen der beschriebenen Ausführungsbeispiele fallen in den Schutzumfang der Erfindung.

ROLLEI - WERKE
Franke & Heidecke
GmbH & Co KG
Braunschweig

25. Juni 1979

A 1159 EU

BEZEICHNUNG GEÄNDERT
siehe Titelseite

VORRICHTUNG FÜR VERDECKTEN DIA-WECHSEL UND
VERFAHREN ZUR HERSTELLUNG DERSELBEN

## ANSPRÜCHE

1. Vorrichtung für verdeckten Dia-Wechsel, gekennzeichnet
   durch eine zwischen Dia-Ebene und Projektionsobjektiv (22)
   bringbare Linsenrasterplatte(10), deren Rückseite ein in
   die Projektionsebene projizierbares Bild enthält.

2. Vorrichtung nach Anspruch 1, dadurch gekennzeichnet, daß
   die Linsenrasterplatte(10), auf ihrer Rückseite eine Lochmaske (14) enthält, deren Löcher (16) den Linsen (12) der
   Linsenrasterplatte (10) zugeordnet sind.

3. Vorrichtung nach Anspruch 2, dadurch gekennzeichnet, daß
   die Mittelpunkte (18) der Löcher (16) jeweils auf den
   optischen Strahlen (31, 32, 33) liegen, welche durch die
   Pupille (24) des Projektionsobjektives (22) und den Scheitelpunkt der jeweils zugeordneten Rasterlinse (12) hindurchgehen.

0021008

- 2 -

4. Vorrichtung nach einem der vorhergehenden Ansprüche, dadurch gekennzeichnet, daß die Linsenrasterplatte (10) aus Plexiglas besteht.

5. Vorrichtung nach einem der vorhergehenden Ansprüche, dadurch gekennzeichnet, daß die Linsenrasterplatte (10) eingefärbt ist.

6. Vorrichtung nach einem der Ansprüche 1 bis 4, dadurch gekennzeichnet, daß ein farbiger Film oder Filter hinter der Linsenrasterplatte (10) vorgesehen ist.

7. Vorrichtung nach einem der Ansprüche 2 bis 6, dadurch gekennzeichnet, daß die Löcher (16) der Lochplatte (14) strukturiert sind.

8. Vorrichtung nach Anspruch 7, dadurch gekennzeichnet, daß einzelnen Linsen (12) der Linsenrasterplatte (10) mehrere strukturierte Löcher (16) zugeordnet sind.

9. Vorrichtung nach einem der vorhergehenden Ansprüche, dadurch gekennzeichnet, daß die Linsenrasterplatte (10) mit einem Film (18) verbunden ist, welcher einen Satz von Teilbildern enthält, die jeweils einer Linse (12) zugeordnet sind und bei der Projektion durch diese und das Projektionsobjektiv (22) ein Pausenbild erzeugen.

10. Vorrichtung nach einem der vorhergehenden Ansprüche, dadurch gekennzeichnet, daß ein mit der Linsenrasterplatte (10) verbundener Film (18) mehrere Sätze von Teilbildern (BPB1, BPB2, BPB3) enthält, welche verschachtelt angeordnet sind und von denen jeder Satz bei der Projektion durch die Linsenrasterplatte (10) und das Projektionsobjektiv (22) ein anderes Pausenbild (PB1, PB2, PB3) erzeugt.

- 3 -

11. Verfahren zum Herstellen einer Linsenrasterplatte
nach einem der Ansprüche 1 bis 10, dadurch gekennzeichnet, daß auf einen mit einer Linsenrasterplatte verbundenen Film durch mehrere übereinander oder nebeneinander angeordnete Objektive und durch die Linsen der Linsenrasterplatte hindurch entsprechend viele Pausenbild-
Vorlagen abgebildet werden und daß danach der Film entwickelt wird.

12. Verfahren zum Herstellen einer Linsenrasterplatte
nach einem der Ansprüche 1 bis 10, dadurch gekennzeichnet, daß eine mit einem Film verbundene Linsenrasterplatte
relativ zu einem Projektionsobjektiv auf einen Bruchteil
1/n ihrer Höhe eingefahren und belichtet wird, daß die
Linsenrasterplatte weitere (n - 1) Male um den gleichen
Bruchteil 1/n weiter eingefahren und belichtet wird, und
daß danach der Film entwickelt wird.

13. Projektor, gekennzeichnet durch eine Führungseinrichtung
zum Einführen einer Linsenrasterplatte (10) in den Strahlengang zwischen die Dia-Ebene (20) und das Projektionsobjektiv (22).

14. Projektor nach Anspruch 13, dadurch gekennzeichnet, daß die
Führungseinrichtung Raster oder Verzögerungseinrichtungen
zum intermittierenden Einfahren der Linsenrasterplatte (10)
aufweist.

15. Projektor nach Anspruch 13 oder 14, dadurch gekennzeichnet,
.daß eine Einrichtung vorgesehen,ist, welche beim Herausfahren des Dias automatisch die Linsenrasterplatte (10) hereinfährt und diese beim Einfahren eines Dias automatisch herausfährt.

FIG. 1

FIG. 2

FIG. 3

FIG. 4

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | DE - B - 1 934 125 (RICOH)<br>+ Anspruch 5; Fig. 1,11,12; Spalte 3, Zeile 54 bis Spalte 5, Zeile 8; Spalte 7, Zeile 8 bis Spalte 8 +<br>-- | 1,6,9, 10 | G 03 B 23/00<br>G 02 B 27/18 |
| | FR - A1 - 2 256 423 (POINTU)<br>+ Fig. 2a, 2b, 4, 6; Seite 3, Zeile 7 bis Seite 4, Zeile 42 +<br>-- | 2 | |
| | DE - B2 - 1 803 686 (RICOH)<br>+ Anspruch 1; Spalte 1, Zeile 66 bis Spalte 2, Zeile 37; Spalte 4, Zeile 13 bis Spalte 5, Zeile 56; Fig. 1 +<br>-- | 9,10 | **RECHERCHIERTE SACHGEBIETE (Int. Cl. 3)**<br><br>G 03 B 21/00<br>G 03 B 23/00<br>G 02 B 27/00<br>G 03 B 33/00 |
| A | US - A - 3 937 565 (ALASIA)<br>+ Fig. 2A-2C; Spalte 3, Zeile 63 bis Spalte 4, Zeile 61 +<br>-- | 1,6 | |
| A | DE - A - 2 409 924 (CANON)<br>+ Fig. 1; Seiten 3-5 +<br>-- | 11 | |
| | US - A - 3 712 724 (BELL TELE-PHONE)<br>+ Fig. 1,2; Spalte 2, Zeilen 18-36 +<br>---- | 2,6 | **KATEGORIE DER GENANNTEN DOKUMENTE**<br><br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |

| | |
|---|---|
| Der vorliegende Recherchenbericht wurde für alle Patentansprüche erstellt. | |

| Recherchenort | Abschlußdatum der Recherche | Prüfer |
|---|---|---|
| WIEN | 30-07-1980 | GRONAU |

EPA form 1503.1 06.78